# DEMANDE DE BREVET EUROPEEN

(11) **EP 1 134 588 A1**
(43) Date de publication de la demande: **19.09.2001**
(21) Numéro de dépôt: 00810194.1
(22) Date de dépôt: 08.03.2000
(51) Int. Cl.: G01P 15/09

(54) **Accéléromètre piézo-électrique avec élément de stabilisation latérale**

(71) Demandeur: VIBRO-METER SA, CH-1701 Fribourg (CH)
(72) Inventeur: Schmid, Felix, 1782 Belfaux (CH); Clément, Nicolas, 1752 Villars-sur-Glane (CH); Broillet, Bernard, 1721 Misery (CH); Maillard, Benoit, 1762 Givisiez (CH)
(74) Mandataire: AMMANN INGENIEURS-CONSEILS EN PROPRIETE INTELLECTUELLE SA BERNE

(57) **Abrégé**

La masse sismique (4) d'un accéléromètre comportant au moins un transducteur électro-mécanique est stabilisée dans la direction perpendiculaire à l'axe sensible par un stabilisateur latéral (8) disposé entre la masse sismique ou le transducteur électro-mécanique et un élément de structure (7). Par cette stabilisation, les perturbations du résultat de mesure par des accélérations latérales sont évitées ou au moins réduites.

## Description

Il est connu d'utiliser des accéléromètres piézo-électriques pour mesurer des vibrations sur des machines tournantes telles que des turbines à gaz ou des réacteurs d'avion. Parmi tous les principes connus pour la conception des accéléromètres, il y en a deux qui sont le plus souvent utilisés: la conception en mode de cisaillement et la conception en mode de compression. Ces deux principes utilisent au moins une masse sismique qui, sous l'effet de l'accélération produite par les vibrations, agit sur un ou plusieurs éléments piézo-électriques.

Dans la conception en mode de cisaillement, c'est la déformation de cisaillement qui est utilisée pour produire une charge électrique, alors que dans la conception en mode de compression, c'est la compression longitudinale des éléments piézo-électriques dans la direction de l'axe sensible qui produit la charge électrique.

Chacun de ces deux principes de conception possède des avantages et des limitations pour le concepteur mais également dans l'application réelle. Les conceptions en mode de cisaillement conduisent à des dispositifs très petits pour une sensibilité donnée mais présentant une fréquence de résonance plus basse. Les conceptions en mode de compression sont connues pour les applications à haute fréquence et, en raison des caractéristiques piézo-électriques de certains matériaux, les concepteurs préfèrent également le mode de compression pour les applications à haute température.

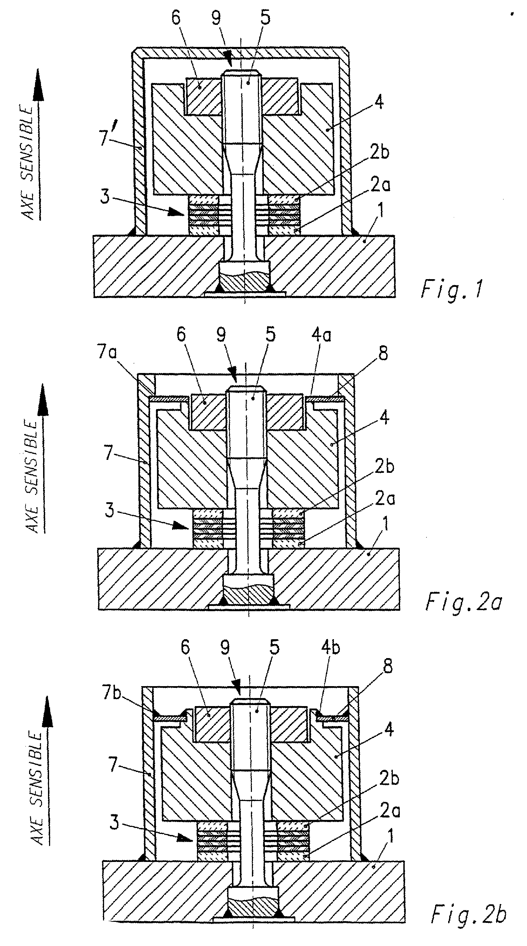

La présente invention est applicable à tous les principes de conception des accéléromètres, mais elle est particulièrement utile pour la conception en mode de compression (voir Fig. 1). Les accéléromètres piézo-électriques peuvent montrer un sérieux problème quand ils sont excités par des niveaux élevés de vibrations dans l'axe transversal, c'est-à-dire dans une direction perpendiculaire à l'axe sensible. Ce problème existe plus spécifiquement quand la fréquence d'excitation vibratoire transversale coïncide avec la résonance transversale du transducteur, ce qui amplifie le mouvement. Dans de telles conditions les efforts de flexion sur les éléments piézo-électriques peuvent conduire à un bruit significatif sur le signal de sortie, qui peut être tel que ce signal soit altéré. Très souvent dans le passé, ce phénomène n'était pas compris correctement et le résultat pouvait être interprété comme un effet pyroélectrique ou un effet de sensibilité à la contrainte de la base de montage (base strain).

L'invention sera expliquée en détail à l'aide des dessins dans lesquelles
- la Figure 1: montre schématiquement une conception d'un accéléromètre piézo-électrique typique connu en mode de compression,
- les Figures 2a et 2b: montrent deux formes d'exécution d'accéléromètres en mode de compression selon l'invention,
- la Figure 3: montre une conception d'un accéléromètre piézo-électrique typique connu en mode de cisaillement, et
- les Figures 4a et 4b: montrent deux formes d'exécution d'accéléromètres en mode de cisaillement selon l'invention.

Sur un support de base 1 (Fig. 1) est monté un transducteur électro-mécanique 9. L'assemblage comprend, entre deux éléments isolant 2a et 2b, un élément sensible 3 constitué de un ou plusieurs éléments piézo-électriques. Entre les éléments piézo-électriques se trouvent des électrodes (non représentées pour raison de clarté) qui collectent la charge électrique. Sur le deuxième élément isolant 2b est monté une masse sismique 4 et le tout est fixé sur le support de base 1 au moyen d'un boulon central 5 et d'un écrou 6. Le boulon est sous précontrainte dans le but d'éviter que des éléments puissent se déplacer dans toutes les conditions d'utilisation. A la place du boulon de précontrainte, les éléments peuvent aussi être collés, soudés ou fixés de toute autre manière. Finalement, le transducteur électro-mécanique 9, décrit ci-dessus, est monté dans un boîtier 7', lequel est fixé de façon rigide au support de base 1.

L'accéléromètre est fixé par son support de base 1 sur la surface vibrante d'un objet à l'aide d'un dispositif de fixation.

Sous l'action de vibrations dans la direction de l'axe sensible, la masse sismique 4, située à l'extrémité libre du transducteur électro-mécanique 9, engendre des forces de compression et décompression contre le support de base 1 et également sur les éléments piézo-électriques qui eux produisent des charges électriques représentant le signal de mesure. Le transducteur fonctionne correctement tant que les forces de décompression, incluant une marge technique, restent plus faibles que la précontrainte sur le boulon central.

Sous l'action de vibrations dans la direction perpendiculaire à l'axe sensible, l'extrémité libre du transducteur électro-mécanique 9 fléchit d'avant en arrière dans la direction de l'excitation. La contrainte de flexion maximale vue par les éléments piézo-électriques peut être très élevée et est normalement supérieure à la contrainte de compression du même niveau d'accélération dans la direction de l'axe sensible. Cet effet de flexion peut conduire à une altération importante du signal de vibration, en particulier quand la fréquence d'excitation vibratoire coïncide avec la fréquence de résonance en flexion du montage.

Le but de la présente invention est de réaliser un accéléromètre piézo-électrique permettant d'éviter, ou au moins de réduire radicalement, l'effet d'altération du signal de vibration mentionné plus haut.

Des accéléromètres selon l'invention, dans une conception en mode de compression, sont montrés dans les Figures 2a et 2b. Ils comportent typiquement les mêmes pièces que pour la conception connue de la Figure 1, mais possèdent une pièce additionnelle, un stabilisateur latéral 8, reliant le transducteur électro-mécanique 9, d'une part, à un élément de structure 7, d'autre part, ledit élément de structure étant fixé de façon rigide au support de base 1. Dans la conception la plus courante, l'élément de structure 7 peut constituer une partie du boîtier de l'accéléromètre, ledit boîtier étant également fixé de façon rigide au support de base 1.

Dans l'arrangement préférentiel de la Figure 2a, le stabilisateur latéral 8 est une simple découpe dans une tôle en métal qui, d'une part, repose sur un épaulement 7a, tourné dans l'élément de structure 7, et qui, d'autre part, touche le transducteur électro-mécanique 9, par exemple à l'extrémité 4a de la masse sismique 4. La position axiale des points de repos 7a et 4a est choisie de telle sorte que la tôle métallique constituant le stabilisateur latéral 8 soit légèrement déformée garantissant ainsi qu'elle soit toujours en léger contact avec l'épaulement 7a et le point de repos 4a.

Dans l'arrangement préférentiel de la Figure 2b, le stabilisateur latéral 8 est soudé, ou lié par un autre moyen au transducteur électro-mécanique 9, d'une part, et à l'élément de structure 7, d'autre part, respectivement, par exemple, à l'extrémité 4b de la masse sismique 4 et au point 7b de l'élément de structure.

Dans les conceptions les plus courantes, le stabilisateur latéral 8 peut être constitué par un disque, par un anneau ou par au moins une barre arrangée en direction radiale et reliant le transducteur électro-mécanique 9, d'une part, à l'élément de structure 7, d'autre part.

Les arrangements préférentiels décrits ci-dessus assurent une stabilisation latérale ainsi qu'un amortissement additionnel de la résonance en flexion et permettent d'obtenir un signal de vibration qui est exempt de bruit dans toutes les conditions. Il est important que le stabilisateur latéral 8 soit aussi rigide que possible dans la direction radiale, mais il doit être aussi souple que possible dans la direction axiale, c'est-à-dire dans la direction sensible des éléments piézo-électriques. De cette façon, la stabilisation latérale est obtenue sans influencer le comportement axial du montage.

De plus, toute influence au travers du boîtier, tel que le bruit acoustique, n'est pas convertie en une altération du signal de vibration en raison du fait que le stabilisateur latéral 8 ne peut pas transmettre une force significative dans la direction axiale.

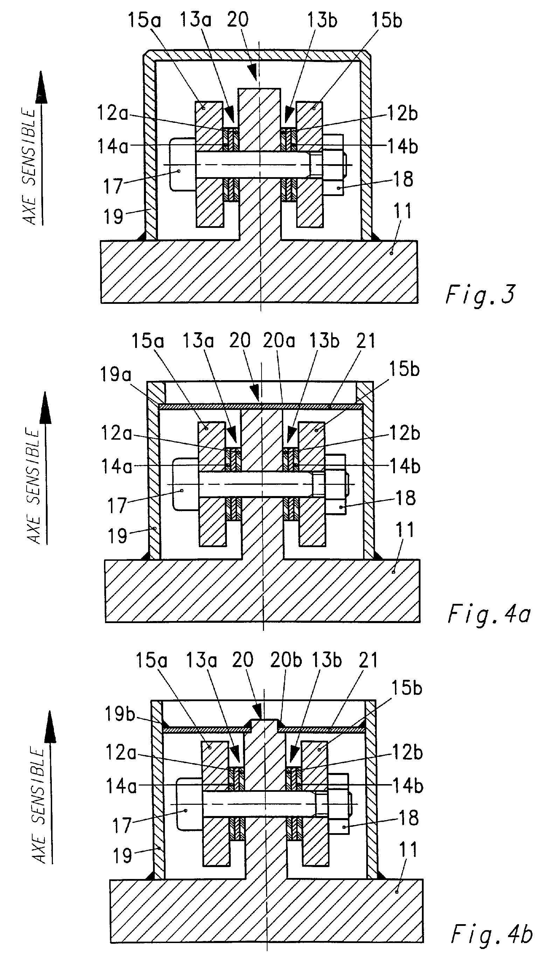

La Figure 3 montre schématiquement une conception d'un accéléromètre piézo-électrique typique en mode de cisaillement.

Sur un support de base 11 est monté un transducteur électro-mécanique 20. L'assemblage comprend un ou plusieurs éléments sensibles 13a et 13b, chacun d'eux étant constitué de un ou plusieurs éléments piézo-électriques montés entre deux éléments isolant 12a et 14a, respectivement 12b et 14b. Entre les éléments piézo-électriques se trouvent des électrodes (non représentées pour raison de clarté) qui collectent la charge électrique.

Sur les deuxièmes éléments isolants 14a et 14b, sont montées des masses sismiques 15a et 15b et le tout est fixé sur le support de base 11 au moyen d'un boulon central 17 et d'un écrou 18. Le boulon est sous précontrainte dans le but d'éviter que des éléments puissent se déplacer dans toutes les conditions d'utilisation. A la place du boulon de précontrainte, les éléments peuvent aussi être collés, soudés ou fixés de toute autre manière. Finalement, le transducteur électro-mécanique 20, décrit ci-dessus, est monté dans un boîtier 19, lequel est fixé de façon rigide au support de base 11.

L'accéléromètre est fixé par son support de base 11 sur la surface vibrante d'un objet à l'aide d'un dispositif de fixation.

Sous l'action de vibrations dans la direction de l'axe sensible, les masses sismiques 15a et 15b engendrent des forces de cisaillement sur les éléments piézo-électriques qui eux produisent des charges électriques représentant le signal de mesure.

Sous l'action de vibrations dans la direction perpendiculaire à l'axe sensible, l'extrémité libre du transducteur électro-mécanique 20 fléchit d'avant en arrière dans la direction de l'excitation. La contrainte de flexion vue par les éléments piézo-électriques peut être très élevée et peut conduire à une altération importante du signal de vibration, en particulier quand la fréquence d'excitation vibratoire coïncide avec la fréquence de résonance en flexion du montage.

La présente invention est aussi applicable pour les accéléromètres piézo-électriques en mode de cisaillement et permet d'éviter, ou au moins de réduire radicalement, l'effet d'altération du signal de vibration mentionné plus haut.

Des variantes de l'invention appliquées à un accéléromètre en mode de cisaillement sont montrées dans les Figures 4a et 4b. Ces accéléromètres comportent typiquement les mêmes pièces que pour la conception connue de la Figure 3, mais possèdent une pièce additionnelle, un stabilisateur latéral 21 reliant le transducteur électro-mécanique 20, d'une part, à un élément de structure 19, d'autre part, ledit élément de structure étant fixé de façon rigide au support de base 11. Dans la conception la plus courante, l'élément de structure 19 peut constituer une partie du boîtier de l'accéléromètre, ledit boîtier étant également fixé de façon rigide au support de base 11.

Dans l'arrangement préférentiel de la Figure 4a, le stabilisateur latéral 21 est une simple découpe dans une tôle en métal qui, d'une part, repose sur un épaulement 19a, tourné dans l'élément de structure 19, et qui, d'autre part, touche le transducteur électro-mécanique 20, par exemple à son extrémité 20a. La position axiale des points de repos 19a et 20a est choisie de telle sorte que la tôle métallique constituant le stabilisateur latéral 21 soit légèrement déformée garantissant ainsi qu'elle soit toujours en léger contact avec l'épaulement 19a et le point de repos 20a.

Dans l'arrangement préférentiel de la Figure 4b, le stabilisateur latéral 21 est soudé, ou lié par tout autre moyen, au transducteur électro-mécanique 20, d'une part, et à l'élément de structure 19, d'autre part, respectivement, par exemple, à son extrémité 20b et au point 19b de l'élément de structure.

Dans les conceptions les plus courantes, le stabilisateur latéral 21 peut être constitué par un disque, par un anneau ou par au moins une barre arrangée en direction radiale et reliant le transducteur électro-mécanique 20, d'une part, à l'élément de structure 19, d'autre part.

Les arrangements préférentiels décrits ci-dessus assurent une stabilisation latérale ainsi qu'un amortissement additionnel de la résonance en flexion et permettent d'obtenir un signal de vibration qui est exempt de bruit dans toutes les conditions. Il est important que le stabilisateur latéral 21 soit aussi rigide que possible dans la direction radiale, mais il doit être aussi souple que possible dans la direction axiale, c'est-à-dire dans la direction sensible des éléments piézo-électriques. De cette façon, la stabilisation latérale est obtenue sans influencer le comportement axial du montage.

De plus, toute influence au travers du boîtier, tel que le bruit acoustique, n'est pas convertie en une altération du signal de vibration en raison du fait que le stabilisateur latéral 21 ne peut pas transmettre une force significative dans la direction axiale.

De préférence, l'élément de structure 7, 19 est de forme cylindrique symétrique (Fig. 2, 2b, 4a, 4b) de diamètre et ainsi de moment d'inertie plus élevé que celui du boulon 5 pour obtenir un effet de stabilisation symétrique et efficace.

## Revendications

1. Accéléromètre avec un support de base (1), un ou plusieurs transducteurs électro-mécaniques (9, 20) constitués d'au moins un élément sensible (3, 13), chacun d'eux comprenant au moins un élément piézo-électrique, le tout étant disposé entre ladite base de montage et une masse sismique (4, 15), **caractérisé en ce qu'**un stabilisateur latéral (8, 21) relie ledit transducteur électro-mécanique à un élément de structure (7, 19), ledit élément de structure étant fixé rigidement audit support de base.

2. Accéléromètre selon la revendication 1, **caractérisé en ce que** le stabilisateur latéral (8, 21) est substantiellement plus rigide dans la direction radiale que dans la direction axiale.

3. Accéléromètre selon les revendications 1 ou 2, **caractérisé en ce que** l'élément de structure (7, 19) constitue une partie du boîtier (7') de l'accéléromètre, ledit boîtier étant fixé rigidement au support de base (1) .

4. Accéléromètre selon l'une des revendications 1 à 3, **caractérisé en ce qu'**une extrémité du stabilisateur latéral (8, 21) repose sur un épaulement de l'élément de structure (7, 19) et l'autre extrémité dudit stabilisateur latéral touche le transducteur électro-mécanique (9, 20).

5. Accéléromètre selon l'une des revendications 1 à 4, **caractérisé en ce que** la position axiale des points de repos du stabilisateur latéral (8, 21) est choisie de telle sorte que ledit stabilisateur latéral soit légèrement déformé pour garantir qu'il soit toujours en léger contact avec le transducteur électro-mécanique (9, 20).

6. Accéléromètre selon l'une des revendications 1 à 5, **caractérisé en ce que** le stabilisateur latéral (8, 21) est une simple découpe dans une tôle en métal.

7. Accéléromètre selon l'une des revendications 1 à 5, **caractérisé en ce que** le stabilisateur latéral (8, 21) consiste en une ou plusieurs barres disposées essentiellement en direction radiale.

8. Accéléromètre selon l'une des revendications 1 à 3, 5 et 6, **caractérisé en ce qu'**une extrémité du stabilisateur latéral (8, 21) est soudée ou liée par tout autre moyen à l'élément de structure (7, 19) et l'autre extrémité est soudée ou liée par tout autre moyen au transducteur électro-mécanique (9, 20).

9. Accéléromètre selon l'une des revendications 1 à 3 et 8, **caractérisé en ce que** le stabilisateur latéral (8, 21) est une simple découpe dans une tôle en métal.

10. Accéléromètre selon l'une des revendications 1 à 3 et 8, **caractérisé en ce que** le stabilisateur latéral (8, 21) consiste en une ou plusieurs barres disposées essentiellement en direction radiale.

11. Accéléromètre selon l'une des revendications 1 à 10, **caractérisé par** un élément de structure (7, 19) cylindrique entourant la ou les masse(s) sismique(s) (4, 15).
